# EUROPÄISCHE PATENTSCHRIFT

(11) **EP 1 602 938 B1**
(45) Veröffentlichungstag und Bekanntmachung des Hinweises auf die Patenterteilung: **05.08.2009**
(21) Anmeldenummer: 05008285.8
(22) Anmeldetag: 15.04.2005
(51) Int. Cl.: G01S 7/483, G01S 7/487

(54) **Entfernungsmesser**
Range measurement device
Télémètre

(30) Priorität: 03.06.2004 DE 102004026991
(43) Veröffentlichungstag der Anmeldung: 07.12.2005
(73) Patentinhaber: SICK AG, 79183 Waldkirch (DE)
(72) Erfinder: Hug, Gottfried, 79183 Waldkirch (DE)
(74) Vertreter: Manitz, Finsterwald & Partner GbR

(56) Entgegenhaltungen:
- EP-A- 1 085 346
- DE-A1- 2 852 504
- US-A- 5 745 437
- US-A- 5 815 250
- US-A- 5 889 490

## Beschreibung

Die Erfindung betrifft einen Entfernungsmesser mit einem Lichtsender zur Aussendung von Lichtimpulsen, einem Lichtempfänger zum Empfang der an einem Objekt reflektierten Lichtimpulse und einer Auswerteeinheit zur Ermittlung eines Entfernungswertes aus der Laufzeit der Lichtimpulse zwischen deren Aussendung und deren Empfang unter Berücksichtigung der Lichtgeschwindigkeit.

Aus dem Stand der Technik sind Vorrichtungen der vorstehend genannten Art bekannt, welche nach unterschiedlichen Prinzipien arbeiten.

Bei auf den bekannten "Puls-Verfahren" basierenden Entfernungsmessern wird beispielsweise ein eine möglichst steile, ansteigende Flanke aufweisender Impuls ausgesandt und anschließend die Zeit ermittelt, welche zwischen dem Auftreten der ansteigenden Flanke des ausgesandten und der ansteigenden Flanke des empfangenen Impulses verstrichen ist. Nachteilig bei diesen Entfernungsmessern ist die Tatsache, dass die genannte Zeit lediglich durch das Abzählen von Taktimpulsen ermittelt wird, die zwischen dem Aussenden und dem Empfangen der ansteigenden Flanke aufgetreten sind. Die Zeitmessung erfolgt dementsprechend lediglich quantisiert und ist folglich hinsichtlich ihrer Genauigkeit auf die Dauer einer Taktperiode beschränkt.

Bei Entfernungsmessern, die auf dem "Continuous-Wave-Verfahren" basieren, wird lediglich eine durch die Lichtlaufzeit bedingte Phasenverschiebung zwischen einem ausgesandten und einem empfangenen Signal ermittelt, was das vorstehend beschriebene, im Zusammenhang mit dem Puls-Verfahren auftretende Quantisierungsproblem beseitigt. Dementsprechend ist mit dem Continuous-Wave-Verfahren eine höhere Auflösung zu erreichen als mit dem Puls-Verfahren. Allerdings ist das Continuous-Wave-Verfahren mit dem Nachteil behaftet, dass es bei der Bestimmung von größeren Entfernungen mehrdeutige Ergebnisse liefert, sobald die auftretende Phasenverschiebung größer ist als eine vollständige Periode des ausgesandten Signals. Diesem Nachteil kann gemäß Stand der Technik nur dadurch begegnet werden, dass mehrere Messfrequenzen eingesetzt werden, was das Verfahren jedoch insgesamt verlangsamt und zudem Probleme aufwirft, wenn während einer Messung die Messdistanz verändert wird.

Aus der US 5,745,437 A ist ein Verfahren und eine Vorrichtung zur Entfernungsmessung bekannt, bei der als Trägersignal ein Strahlungszug, z.B. Laserstrahlung ausgesendet wird, wobei dieses Trägersignal mit einer Radialfrequenz phasenkohärent moduliert ist. Die Modulation des optischen Trägersignals soll dabei eine hohe absolute Genauigkeit gewährleisten, während Uneindeutigkeiten bei der Phasenverschiebung, die größer als eine vollständige Periode sind, durch Ermitteln des Laufzeitunterschiedes zwischen der Aussendung und dem Empfangs des Strahlungszuges eliminiert werden können. Zur Auswertung wird das Empfangssignal zwei Demodulatoren zusammen mit einem der Erzeugung des Trägersignals dienenden Referenzsignal zugeführt.

Die US 5,815,250 A offenbart ein Laserradarsystem zur Abstands- und Geschwindigkeitsmessung, bei dem Doppelpulse zum Einsatz gelangen. Die Geschwindigkeitsbestimmung beruht auf der Bestimmung der Phasendifferenz zwischen den Trägern der empfangenen Pulse, bei der ein Surface-Acoustic-Wave-Prozessor zur Anwendung gelangt.

Die DE 28 52 504 A1 betrifft ein Entfernungsmessverfahren bzw. eine entsprechende Einrichtung, bei der ähnlich wie bei der US 5,745,437 A das Laufzeitverfahren mit dem Phasenmessverfahren kombiniert wird.

Die US 6,115,113 A betrifft die Signalverarbeitung in einem System zur Abstandsbestimmung mittels Laserstrahlen (LADAR). Das Empfangssignal wird direkt einem A/ D-Wandler zugeführt. Die digitalen Abtastwerte werden in einem RAM-Puffer gespeichert und mit einem vorab gespeicherten Muster gefaltet, um den Energieschwerpunkt des Antwortpulses zu ermitteln. Bei einer Ausführungsform ist ein Nebenpfad vorgesehen, in dem nach Filterung des digitalisierten Empfangssignals die ungefähre Lage des im RAM abgespeicherten Antwortsignals bestimmt wird, um dadurch die Menge der im Faltungsprozess zu verarbeitenden Abtastwerte auf den tatsächlich relevanten Bereich zu begrenzen.

Aus dem Stand der Technik sind noch auf weiteren Verfahren basierende Entfernungsmesser bekannt. Beispielhaft seien hier das "Frequenz-Verfahren" sowie ein nach einem rückgekoppelten Oszillator-Prinzip arbeitendes Verfahren erwähnt. Auch diese Verfahren sind mit Nachteilen hinsichtlich ihrer Geschwindigkeit, Stabilität, Genauigkeit und/oder Eindeutigkeit behaftet.

Eine Aufgabe der Erfindung besteht darin, einen Entfernungsmesser der eingangs genannten Art derart zu verbessern, dass er dazu in der Lage ist, bei höchstmöglicher Auflösung eindeutige Ergebnisse zu liefern. Insbesondere soll er ohne Modifikationen sowohl für die Ermittlung von sehr kurzen als auch für die Ermittlung von sehr großen Distanzen einsetzbar und auf wirtschaftliche Art und Weise herstellbar sein.

Erfindungsgemäß wird diese Aufgabe dadurch gelöst, dass ein vom Ausgangssignal des Lichtempfängers beaufschlagbares Filter vorgesehen ist und zwischen der Auswerteeinheit und den Filter ein A/D-Wandler zur Digitalisierung der Filterantworten angeordnet ist, wobei die Auswerteeinheit zur Berechnung der Laufzeit zwischen Aussendung zumindest eines Lichtimpulses und dem Auftreten eines Signalcharakteristikums der Filterantwort des Filters ausgelegt ist.

Der Erfindung liegt die Erkenntnis zugrunde, dass bei den bisher bekannten Puls-Verfahren immer nur ein sehr kleiner Anteil der Energie der Empfangsimpulse dafür genutzt wird, um den Empfangsimpuls in eine zeitlich korrekte Relation zum Sendeimpuls zu setzen. Konkret wird in der Regel ausschließlich die ansteigende Flanke des Empfangsimpulses untersucht, wohingegen der wesentliche Teil der Signalenergie, die im Empfangsimpuls noch enthalten ist, nachdem seine ansteigende Flanke einen Schwellwert überschritten hat, vollkommen ungenutzt bleibt.

Erfindungsgemäß wird nun ein deutlich größerer Anteil der dem Empfangsimpuls immanenten Signalenergie dafür genutzt, seine zeitliche Relation zum Sendeimpuls zu bestimmen, indem der Empfangsimpuls ein Filter anstößt, und zur Bestimmung der zeitlichen Relation zwischen Sende- und Empfangsimpuls nicht der Empfangsimpuls selbst, sondern vielmehr zumindest ein wesentlicher Abschnitt der Filterantwort des genannten Filters untersucht wird. Eine zusätzlich vergrößerte Signalenergie kann dann genutzt werden, wenn nicht nur ein einzelner Sendeimpuls, sondern eine Folge von Sendeimpulsen (Burst) ausgesandt wird, die dann alle zur Filterantwort beitragen. Die Filterantwort besitzt bei Anregung des Filters mit einem eine bestimmte Signalform aufweisenden Empfangsimpuls einen bekannten, charakteristischen Verlauf. Innerhalb dieses bekannten, charakteristischen Verlaufs der Filterantwort kann dann die zeitliche Position eines bestimmten, eindeutigen Signalcharakteristikums der Filterantwort berechnet werden, wobei für diese Berechnung vorzugsweise der gesamte ermittelte Verlauf der Filterantwort herangezogen wird, so dass letztlich der größte Teil der Signalenergie des Empfangsimpulses bzw. der Empfangsimpulse für die genannte Berechnung genutzt werden kann. Anschließend kann dann aus der ermittelten zeitlichen Position des genannten Signalcharakteristikums und dem bekannten Zeitpunkt der Aussendung des Lichtsignals die Laufzeit zwischen Aussendung und Empfang des Lichtsignals und aus dieser Laufzeit letztlich die zu bestimmende Entfernung berechnet werden.

Bevorzugt ist das erfindungsgemäß eingesetzte Filter so ausgestaltet, dass dessen Filterantwort bei Beaufschlagung mit einem Puls oder einer Pulsfolge ein Signal mit einem charakteristischen Ein- und Aussschwingverhalten darstellt. Zum Beispiel kann dieses Signal einen steilen Anstieg im Bereich des Beginns des Pulses bzw. der Pulsfolge, einen steilen Abfall im Bereich des Endes des Pulses bzw. der Pulsfolge und einen flachen Verlauf in seinem mittleren Bereich aufweisen. In diesen Fällen liegt ein charakteristischer Signalverlauf vor, der in signifikanter Weise dazu beitragen kann, die zeitliche Position des jeweiligen Signalcharakteristikums der Filterantwort zu berechnen.
Beispielsweise kann die Filterantwort aber auch einen im Wesentlichen sinusförmigen Signalverlauf aufweisen, dessen Maximalamplitude sich über die Dauer der Filterantwort kontinuierlich ändert.

Wenn beispielsweise der Beginn der Filterantwort als zu ermittelndes Signalcharakteristikum gewählt wird, kann die zeitliche Position des gesuchten Beginns der Filterantwort sehr genau und beispielsweise mittels eines Signalprozessors auf einfache Weise dadurch ermittelt werden, dass die Korrelationsfunktion zwischen der Filterantwort und dem in der Auswerteeinheit gespeicherten qualitativen Verlauf der Filterantwort gebildet wird. Derjenige Zeitpunkt, bei dem die Korrelationsfunktion dann ein Maximum aufweist, entspricht der zu ermittelnden Laufzeit, wenn der Zeitpunkt t = 0 der Korrelationsfunktion dem Zeitpunkt der Aussendung des Lichtimpulses entspricht. Anstelle des Beginns kann auch das Ende der Filterantwort als zu ermittelndes Signalcharakteristikum gewählt werden.

Alternativ zu der vorstehend erläuterten klassischen Korrelationsmethode kann jedoch auch bevorzugt eine Korrelation an einem Kosinus angewendet werden. In diesem Fall dient eine Kosinusfunktion als Referenzsignal, welches an jeder Stelle im Bereich von 0 bis 2π Funktionswerte zur Verfügung stellt. Der Summenterm der Korrelationseinträge, welche das Produkt aus dem Kosinusfunktionswert und dem jeweiligen normalisierten Wert der Filterantwort repräsentieren, ist über den gesamten Bereioch von 0 bis 2π Null. Diese Nullstelle kann leicht gefunden werden, da der Funktionsverlauf des Summenterms selbst einer Sinusfunktion folgt, die im Bereich der Nullstelle nicht nur monoton verläuft, sondern auch ihre maximale Steilheit und eine hohe Linearität besitzt. Dies ist ein relevanter Vorzug gegenüber der klassischen Korrelation, welche im Endbereich einen flachen und nicht monotonen Verlauf nimmt. So wird es möglich, die Laufzeit aus zwei im Bereich der Nullstelle approximierten Funktionswerten direkt zu berechnen.

Das erfindungsgemäß eingesetzte Filter wird bevorzugt als Kohärenzfilter ausgebildet. Bevorzugt handelt es sich um ein passives Filter höherer Ordnung, welches diskret oder integriert aufgebaut sein kann. Das Filter kann den Frequenzverlauf eines Bandfilters besitzen mit steil abfallender Sperr-Charakteristik zur Oberwellenunterdrückung und ausgeprägter Kohärenz über zumindest eine Schwingungsperiode. Die Filterkoeffizienten können an die Anzahl der Impulse der verwendeten Impulsfolge gekoppelt sein; wobei mit einer höheren, beispielsweise über 5 liegenden Anzahl eine feinere und genauere Filteradaption möglich wird. Dies wiederum ermöglicht ein leistungsfähiges und dabei wirtschaftliches Undersampling mit hohem Energie-Nutzungsgrad.

Die Laufzeit lässt sich erfindungsgemäß besonders leicht ermitteln, wenn die Auswerteeinheit diejenige Zeitspanne berechnet, die zwischen dem Beginn der Aussendung des mindestens einen Lichtimpulses und dem Beginn der durch den mindestens einen empfangenen Lichtimpuls erzeugten Filterantwort liegt.

Bevorzugt ist die erfindungsgemäß eingesetzte Auswerteeinheit mit einem digitalen Signalprozessor ausgestattet.

Da es wünschenswert ist, dass das Abtasten der Filterantwort in einem möglichst unveränderlichen Takt in stets gleichen Zeitabständen erfolgt, wird zwischen dem Filter und dem A/ D-Wandler bevorzugt eine Samplingstufe angeordnet, welche die analoge Filterantwort an ihrem Ausgang als treppenförmiges Signal für den A/ D-Wandler zur Verfügung stellt, wobei die den einzelnen Stufen des treppenförmigen Signals zugeordneten Zeitdauern untereinander bis auf vernachlässigbare Toleranzen identisch sind.

Um zu erreichen, dass die vorstehend genannten Toleranzen tatsächlich vernachlässigbar klein werden, wird die Samplingstufe von einem Taktsignal beaufschlagt, welches von einem Surface-Acoustic-Wave-Oszillator abgeleitet ist. Ein Surface-Acoustic-Wave-Oszillator weist auf vorteilhafte Weise einen minimalen System-Jitter auf und sorgt durch seine Schmalbandigkeit für Kohärenz über einen großen Zeitbereich.
Besonders bevorzugt ist es, wenn das von dem Surface-Acoustic-Wave-Oszillator abgeleitete Taktsignal nicht nur die Samplingstufe, sondern auch den Lichtsender beaufschlagt, so dass Samplingstufe und Lichtsender sehr exakt miteinander synchronisiert sind. Diese exakte Synchronisation erlaubt dann, den zeitlichen Abstand zwischen Aussendung eines Lichtimpulses und dem gesuchten Signalcharakteristikum der Filterantwort sehr genau zu berechnen.

Bevorzugt ist es, wenn zur Kalibrierung des Surface-Acoustic-Wave-Oszillators ein Quarzoszillator vorgesehen wird, da ein solcher Quarzoszillator im Vergleich zu einem Surface-Acoustic-Wave-Oszillator eine bessere Langzeitstabilität und ein besseres Temperaturverhalten aufweist. Der Einsatz des Quarzoszillators führt dabei in der Regel zu keinerlei relevanten Zusatzkosten, da ein solcher Quarzoszillator in der Auswerteeinheit zur Beaufschlagung eines entsprechenden Prozessors ohnehin vorhanden ist.

Die einen digitalen Signalprozessor umfassende Auswerteeinheit kann zur Interpolation der vom A/D-Wandler gelieferten Stützstellenwerte der Filterantwort oder zur Interpolation der Beträge dieser Stützstellenwerte sowie zur Ermittlung des Beginns der interpolierten Filterantwort ausgelegt werden. Möglich ist eine kubische Spline-Interpolation, beispielsweise bei weniger als fünf Impulsen pro Impulszug. Vorteilhaft ist aber der Einsatz von mehr als fünf Impulsen pro Impulszug, wobei dann- wie bereits erläutert - eine Kosinuskorrelation ohne Zuhilfenahme einer Interpolation möglich ist, wobei in diesem Fall die Rechenzeit für die Interpolation eingespart werden kann. Wie bereits erwähnt, kann der Beginn der Filterantwort bevorzugt mittels eines digitalen Signalprozessors durch Bildung einer Korrelationsfunktion ermittelt werden. Wenn anstelle der Kosinuskorrelation eine klassiche Korrelationsmethode eingesetzt werden soll, muss in der Auswerteeinheit der qualitative Signalverlauf der jeweils erwarteten Filterantwort gespeichert sein. Es wird in diesem Fall dann die Korrelationsfunktion zwischen diesem gespeicherten Signalverlauf und der tatsächlich vorliegenden Filterantwort berechnet.

Der erfindungsgemäß eingesetzte Lichtsender kann zur Aussendung aufeinanderfolgender Einzelimpulse oder aufeinanderfolgender Impulszüge (Bursts) ausgelegt sein, wobei zur Laufzeitberechnung jeweils die durch einen empfangenen Lichtimpuls bzw. einen empfangenen Impulszug erzeugte Filterantwort des Filters herangezogen wird. Alternativ ist es auch möglich, zur auf einen Entfernungswert bezogenen Laufzeitberechnung nicht nur eine Lichtimpulsaussendung bzw. eine Impulszugaussendung und die jeweils zugehörige Filterantwort heranzuziehen, sondern mehrere Lichtimpulsaussendungen bzw. mehrere Impulszugaussendungen mit den jeweils zugehörigen Filterantworten zu berücksichtigen. Die im letztgenannten Fall gemeinsam zur Auswertung herangezogenen Filterantworten können dann vom A/ D-Wandler beispielsweise zeitversetzt abgetastet werden, so dass sich für die - bei unveränderter Entfernung - untereinander gleichen Filterantworten eine erhöhte Anzahl von Stützstellenwerten ergibt. In diesem Fall kann dann der A/D-Wandler und ggf. die Samplingstufe mit einer unter dem Nyquist-Kriterium liegenden Abtastrate betrieben werden, was in der Regel zu einer Kosteneinsparung führt, da hohe Abtastraten regelmäßig mit erhöhtem wirtschaftlichen Aufwand verbunden sind.

Wenn anstelle der Aussendung von Einzelimpulsen Impulszüge ausgesandt werden, ist es von Vorteil, wenn derartige Impulszüge aus mehreren Einzelimpulsen bestehen, die jeweils eine Rechteckform aufweisen. Insbesondere kann ein solcher Impulszug ein Puls-/ Pausenverhältnis von 1:1 besitzen. Besonders bevorzugt ist es, wenn ein Impulszug aus mehr als fünf Einzelimpulsen besteht, wobei pro Pulsperiode vom A/D-Wandler bevorzugt vier Stützstellenwerte ermittelt werden.
Beim Einsatz eines Impulszuges kann ferner die Bandbreite des Filters schmalbandig auf die Frequenz des Impulszuges eingestellt werden, um so eine verbesserte Beseitigung von Störsignalen zu erreichen.

Weitere bevorzugte Ausführungsformen der Erfindung sind in den Unteransprüchen genannt.

Die Erfindung wird nachfolgend anhand von Ausführungsbeispielen unter Bezugnahme auf die Figuren erläutert; in diesen zeigen:
- Fig. 1a: den zeitlichen Verlauf eines ausgesandten Einzelimpulses,
- Fig. 1b: den zeitlichen Verlauf eines von einem Lichtempfänger empfangenen Einzelimpulses gemäß Fig. 1a,
- Fig. 2a: den zeitlichen Verlauf eines ausgesandten Impulszuges,
- Fig. 2b: den zeitlichen Verlauf der Filterantwort eines erfindungsgemäß eingesetzten Filters nach dem Empfang eines Impulszuges gemäß Fig. 2a, und
- Fig. 3: ein Blockschaltbild eines erfindungsgemäßen Entfernungsmessers.

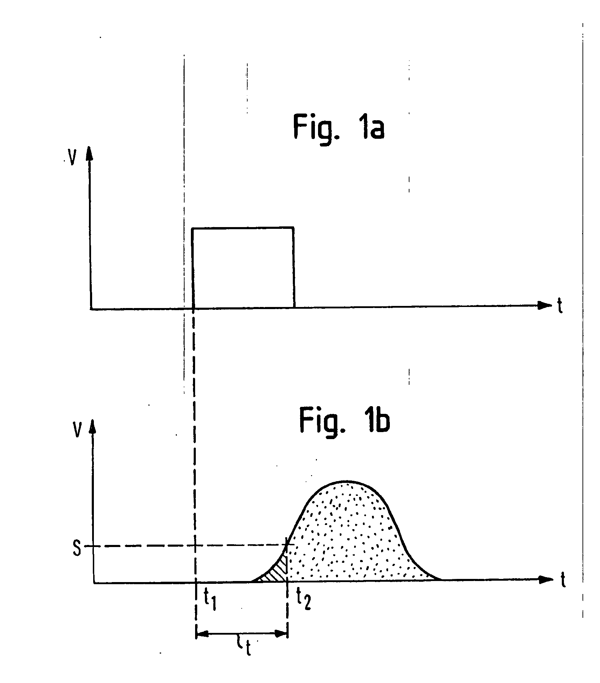

Der in Fig. 1a dargestellte zeitliche Verlauf eines ausgesandten Einzelimpulses kann sowohl bei einem erfindungsgemäß arbeitenden Entfernungsmesser als auch bei einem Entfernungsmesser, welcher nach dem aus dem Stand der Technik bekannten Puls-Verfahren arbeitet, eingesetzt werden. Ein solcher Einzelimpuls weist bevorzugt eine Rechteckform auf.

Fig. 1b zeigt den erfindungsgemäßen Verlauf des Ausgangssignals eines Lichtempfängers nach dem Empfang eines Einzelimpulses gemäß Fig. 1a ohne den Einsatz eines erfindungsgemäßen Filters. Bei einem nach dem Puls-Verfahren arbeitenden Entfernungsmesser wird der Signalverlauf gemäß Fig. 1b daraufhin untersucht, zu welchem Zeitpunkt die ansteigende Flanke des Empfangsimpulses einen Schwellwert S überschreitet. Es wird dann die Differenz t zwischen diesem Zeitpunkt t₂ und dem Zeitpunkt t₁, zu dem die Aussendung des Lichtimpulses gemäß Fig. 1a begonnen hatte, ermittelt, wobei diese Differenz t dann der von der zu ermittelnden Entfernung abhängigen Lichtlaufzeit entspricht.

Fig. 1b veranschaulicht, dass zur Bestimmung des Zeitpunkts t₂ lediglich derjenige, vergleichsweise kleine Signalabschnitt des Empfangsimpulses verwendet wird, welcher sich vom Beginn des Impulses bis zum Überschreiten des Schwellwertes S erstreckt. Die diesem Signalabschnitt zugeordnete Energie ist in Fig. 1b schraffiert gekennzeichnet. Die gesamte restliche Energie des Empfangsimpulses, welche in Fig. 1b gepunktet dargestellt ist, trägt in keiner Weise zur Ermittlung des Zeitpunktes t₂ bei, was, wie im Rahmen der Erfindung erkannt wurde, von Nachteil ist.

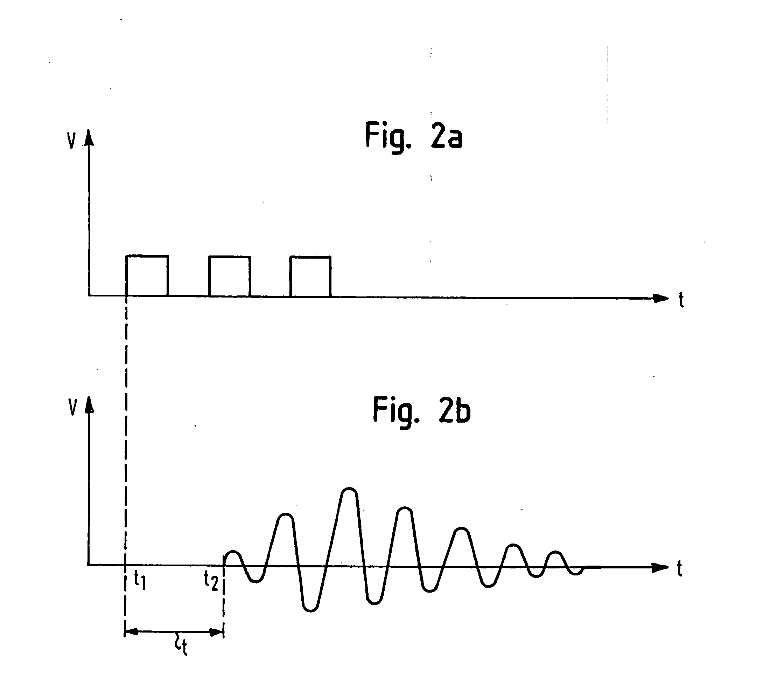

Fig. 2a zeigt den zeitlichen Verlauf eines von einem erfindungsgemäßen Entfernungsmesser ausgesandten Impulszuges, welcher aus drei aufeinanderfolgenden Einzelimpulsen besteht, die jeweils eine Rechteckform aufweisen, wobei der Impulszug ein Puls-/Pausenverhältnis von 1:1 besitzt. Alternativ könnten auch Impulszüge mit nur zwei Einzelimpulsen oder mit mehr als drei Einzelimpulsen zum Einsatz gelangen. Bevorzugt ist es jedoch generell, wenn Impulszüge mit mehr als fünf und weniger als fünfzig Einzelimpulsen verwendet werden.

In Fig. 2b ist der zeitliche Verlauf der Filterantwort eines erfindungsgemäß eingesetzten Filters gezeigt, welchem das Empfangssignal eines Lichtempfängers nach dem Empfang eines Impulszuges gemäß Fig. 2a zugeführt wurde. Diese Filterantwort besitzt den Verlauf eines im Wesentlichen sinusförmigen Signals mit sich ändernder Maximalamplitude, wobei diese Maximalamplitude innerhalb der ersten drei Perioden ansteigt und anschließend über mehr als drei Perioden wieder abfällt.

Wenn über eine erfindungsgemäß in der bereits erläuterten Weise eingesetzte Samplingstufe mit nachgeschaltetem A/D-Wandler pro Periode der Filterantwort beispielsweise vier Stützstellenwerte ermittelt werden und in der Auswerteeinheit der qualitative Verlauf der Filterantwort gespeichert ist, kann durch die Bildung einer Korrelationsfunktion zwischen den Stützstellen der Filterantwort gemäß Fig. 2b und entsprechenden Stützstellen des gespeicherten qualitativen Filterantwortverlaufs der Zeitpunkt t₂ ermittelt werden, welcher dem Beginn der Filterantwort gemäß Fig. 2b entspricht. Die Zeitdifferenz t zwischen diesem Zeitpunkt t₂ und dem Zeitpunkt ti, zu dem die Aussendung des Impulszuges gemäß Fig. 2a eingesetzt hat, entspricht dann der zu ermittelnden Laufzeit, welche den zu bestimmenden Entfernungswert repräsentiert.

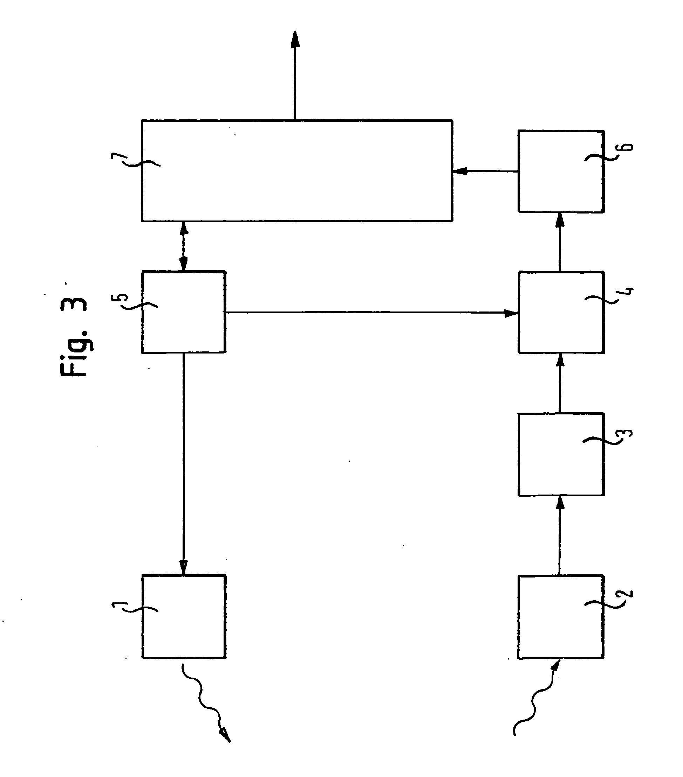

Fig. 3 zeigt im Rahmen eines Blockschaltbildes den prinzipiellen Aufbau eines erfindungsgemäßen Entfernungsmessers.

Ein solcher Entfernungsmesser besitzt einen Lichtsender 1, welcher zur Aussendung von aufeinanderfolgenden Impulszügen geeignet ist. Die ausgesandten Impulszüge werden an einem in Fig. 3 nicht dargestellten Objekt reflektiert und gelangen auf diese Weise zu einem Lichtempfänger 2, welcher die empfangenen Lichtimpulse in ein entsprechendes elektrisches Signal umwandelt. Dieses elektrische Signal stößt ein dem Lichtempfänger 2 nachgeschaltetes Kohärenzfilter 3 an, welches eine seiner Filterfunktion entsprechende Filterantwort an seinem Ausgang erzeugt. Diese Filterantwort wird nun einer Samplingstufe 4 zugeführt, welche gemeinsam mit dem Lichtsender 1 von einem Surface-Acoustic-Wave-Oszillator 5 mit einem gemeinsamen Taktsignal beaufschlagt wird.

Der Ausgang der Samplingstufe 4 ist mit dem Eingang eines A/D-Wandlers 6 verbunden, der das Ausgangssignal der Samplingstufe 4 digitalisiert und einer Auswerteeinheit 7 zur Verfügung stellt.

Die Auswerteeinheit 7 besitzt neben einem Signalprozessor einen Quarzoszillator, welcher den Surface-Acoustic-Wave-Oszillator 5 kalibriert.

Die Auswerteeinheit 7 ist dabei in der vorstehend bereits beschriebenen Weise dazu in der Lage, aus dem vom A/ D-Wandler 6 zur Verfügung gestellten Signal und dem in der Auswerteeinheit 7 abgespeicherten qualitativen Verlauf der Filterantwort des Filters 3 sowie der Kenntnis des Zeitpunkts der Aussendung eines Impulszuges durch den Lichtsender 1 die Lichtlaufzeit zu berechnen, die der Impulszug vom Lichtsender 1 zum Lichtempfänger 2 benötigt. Das durch die Auswerteeinheit berechnete Produkt zwischen der genannten Lichtlaufzeit und der Lichtgeschwindigkeit stellt dann die zu ermittelnde Entfernung dar, welche am Ausgang der Auswerteeinheit 7 zur Verfügung gestellt wird.

### Bezugszeichenliste

- 1: Lichtsender
- 2: Lichtempfänger
- 3: Filter
- 4: Samplingstufe
- 5: Surface-Acoustic-Wave-Oszillator
- 6: A/D-Wandler
- 7: Auswerteeinheit

## Patentansprüche

1. Entfernungsmesser mit einem Lichtsender (1) zur Aussendung von Lichtimpulsen, einem Lichtempfänger (2) zum Empfang der an einem Objekt reflektierten Lichtimpulse und einer Auswerteeinheit (7) zur Ermittlung eines Entfernungswertes aus der Laufzeit der Lichtimpulse zwischen deren Aussendung und deren Empfang unter Berücksichtigung der Lichtgeschwindigkeit,
**dadurch gekennzeichnet,**
**dass** ein vom Ausgangssignal des Lichtempfängers (2) beaufschlagbares Filter (3) vorgesehen ist und zwischen der Auswerteeinheit (7) und dem Filter (3) ein A/D-Wandler (6) zur Digitalisierung der Filterantworten angeordnet ist, wobei die Auswerteeinheit (7) zur Berechnung der Laufzeit zwischen Aussendung zumindest eines Lichtimpulses und dem Auftreten eines Signalcharakteristikums der Filterantwort des Filters (3) ausgelegt ist.

2. Entfernungsmesser nach Anspruch 1,
**dadurch gekennzeichnet,**
**dass** die Filterantwort bei Beaufschlagung des Filters (3) mit einem Puls oder einer Pulsfolge ein Signal mit einem charakteristischen Ein- und Aussschwingverhalten darstellt.

3. Entfernungsmesser nach einem der vorhergehenden Ansprüche,
**dadurch gekennzeichnet,**
**dass** die Filterantwort bei Beaufschlagung des Filters (3) mit einem Puls oder einer Pulsfolge ein im Wesentlichen sinusförmiges Signal mit sich ändernder Maximalamplitude darstellt.

4. Entfernungsmesser nach einem der vorhergehenden Ansprüche,
**dadurch gekennzeichnet,**
**dass** das Filter (3) als Kohärenzfilter ausgebildet ist, das insbesondere als passives Filter höherer Ordnung ausgestaltet ist, welches diskret oder integriert aufgebaut ist und/oder den Frequenzverlauf eines Bandfilters besitzt, mit steil abfallender Sperr-Charakteristik und Kohärenz über zumindest eine Schwingungsperiode.

5. Entfernungsmesser nach einem der vorhergehenden Ansprüche,
**dadurch gekennzeichnet,**
**dass** das Signalcharakteristikum der Beginn oder das Ende der Filterantwort ist.

6. Entfernungsmesser nach einem der vorhergehenden Ansprüche,
**dadurch gekennzeichnet,**
**dass** die Auswerteeinheit (7) zur Berechnung der Laufzeit zwischen dem Beginn der Aussendung des mindestens einen Lichtimpulses und dem Auftreten des Beginns der durch den mindestens einen empfangenen Lichtimpuls erzeugten Filterantwort des Filters (3) ausgelegt ist.

7. Entfernungsmesser nach einem der vorhergehenden Ansprüche,
**dadurch gekennzeichnet,**
**dass** zwischen dem Filter (3) und dem A/D-Wandler (6) eine Samplingstufe (4) angeordnet ist.

8. Entfernungsmesser nach Anspruch 7,
**dadurch gekennzeichnet,**
**dass** die Samplingstufe (4) und der Lichtsender (1) von einem gemeinsamen Taktsignal, welches insbesondere von einem Surface-Acoustic-Wave-Oszillator (5) abgeleitet ist, beaufschlagt und miteinander synchronisierbar sind, wobei insbesondere zur Kalibrierung des Surface-Acoustic-Wave-Oszillators (5) ein Quarzoszillator vorgesehen ist.

9. Entfernungsmesser nach einem der Ansprüche 7 oder 8,
**dadurch gekennzeichnet,**
**dass** die Auswerteeinheit (7) zur Interpolation der vom A/D-Wandler (6) gelieferten Stützstellenwerte der Filterantwort oder zur Interpolation der Beträge dieser Stützstellenwerte sowie zur Ermittlung des Beginns der interpolierten Filterantwort ausgelegt ist.

10. Entfernungsmesser nach einem der vorhergehenden Ansprüche,
**dadurch gekennzeichnet,**
**dass** in der Auswerteeinheit (7) der qualitative Signalverlauf der jeweils erwarteten Filterantwort abgespeichert ist.

11. Entfernungsmesser nach einem der vorhergehenden Ansprüche,
**dadurch gekennzeichnet,**
**dass** der Lichtsender (1) zur Aussendung aufeinander folgender Einzelimpulse oder aufeinander folgender Impulszüge (Bursts) ausgelegt ist, wobei zur Laufzeitberechnung jeweils die durch einen empfangenen Lichtimpuls bzw. einen empfangenen Impulszug erzeugte Filterantwort des Filters (3) herangezogen wird.

12. Entfernungsmesser nach einem der Ansprüche 7 bis 11,
**dadurch gekennzeichnet,**
**dass** der A/D-Wandler (6) mit einer unter dem Nyquist-Kriterium liegenden Abtastrate betreibbar ist und zur Ermittlung eines Abstandswerts mehrere ausgesandte und empfangene Impulszüge herangezogen werden.

13. Entfernungsmesser nach einem der Ansprüche 11 oder 12,
**dadurch gekennzeichnet,**
**dass** ein Impulszug aus mehreren Einzelimpulsen besteht, die jeweils eine Rechteckform aufweisen, wobei der Impulszug insbesondere ein Puls-/Pausenverhältnis von 1:1 besitzt und/oder dass ein Impulszug aus mehr als fünf Einzelimpulsen besteht, wobei pro Pulsperiode vom A/ D-Wandler (6) vier Stützstellenwerte ermittelt werden.

## Claims

1. A distance measurement device having a light transmitter (1) for the transmission of light pulses, a light receiver (2) for the reception of the light pulses reflected at an object and an evaluation unit (7) for the determination of a distance value from the time of flight of the light pulses between their transmission and their reception while taking account of the speed of light,
**characterised in that**
a filter (3) is provided which is acted on by the output signal of the light receiver (2) and an A/D converter (6) for the digitization of the filter responses is arranged between the evaluation unit (7) and the filter (3), with the evaluation unit (7) being designed for the calculation of the time of flight between the transmission of at least one light pulse and the occurrence of a signal characteristic of the filter response of the filter (3).

2. A distance measurement device in accordance with claim 1, **characterised in that** the filter response when a pulse or a pulse signal acts on the filter (3) represents a signal having a characteristic transient oscillation behaviour and a decaying behaviour.

3. A distance measurement device in accordance with any one of the preceding claims, **characterised in that** the filter response when a pulse or a pulse sequence acts on the filter (3) represents a substantially sinusoidal signal with a varying maximum amplitude.

4. A distance measurement device in accordance with any one of the preceding claims, **characterised in that** the filter (3) is made as a coherence filter which is in particular made as a passive filter of a higher order which has a discrete or integrated structure and/or has the frequency line of a band filter with a steeply falling blocking characteristic line and coherence over at least one period of oscillation.

5. A distance measurement device in accordance with any one of the preceding claims, **characterised in that** the signal characteristic is the start or the end of the filter response.

6. A distance measurement device in accordance with any one of the preceding claims, **characterised in that** the evaluation unit (7) is designed for the calculation of the time of flight between the start of the transmission of the at least one light pulse and the occurrence of the start of the filter response of the filter (3) generated by the at least one received light pulse.

7. A distance measurement device in accordance with any one of the preceding claims, **characterised in that** a sampling stage (4) is arranged between the filter (3) and the A/D converter (6).

8. A distance measurement device in accordance with claim 7, **characterised in that** the sampling stage (4) and the light transmitter (1) are acted on and can be mutually synchronised by a common clock signal which is in particular derived from a surface acoustic wave oscillator (5), with a quartz oscillator in particular being provided for the calibration of the surface acoustic wave oscillator (5).

9. A distance measurement device in accordance with one of the claims 7 or 8, **characterised in that** the evaluation unit (7) is designed for the interpolation of the sampling point values of the filter response delivered by the A/D converter (6) or for the interpolation of the magnitudes of these sampling point values as well as for the determination of the start of the interpolated filter response.

10. A distance measurement device in accordance with any one of the preceding claims, **characterised in that** the qualitative signal line of the respective expected filter response is stored in the evaluation unit (7).

11. A distance measurement device in accordance with any one of the preceding claims, **characterised in that** the light transmitter (1) is designed for the transmission of mutually following individual pulses or mutually following pulse trains (bursts), with the respective filter response of the filter (3) generated by a received light pulse or by a received pulse train being used for the calculation of the time of flight.

12. A distance measurement device in accordance with any one of the claims 7 to 11, **characterised in that** the A/D converter (6) can be operated with a sampling rate below the Nyquist criterion and a plurality of transmitted and received pulse trains can be used for the determination of a distance value.

13. A distance measurement device in accordance with one of the claims 11 or 12, **characterised in that** a pulse train is made up of a plurality of individual pulses which each have a rectangular shape, with the pulse train in particular having a pulse-to-break ratio of 1:1; and/or **in that** a pulse train comprises more than five individual pulses, with four sampling point values being determined by the A/D converter (6) per pulse period.

## Revendications

1. Appareil de mesure de distance comprenant un émetteur de lumière (1) pour émettre des impulsions lumineuses, un récepteur de lumière (2) pour recevoir les impulsions lumineuses réfléchies sur un objet, et une unité d'évaluation (7) pour déterminer une valeur de distance à partir du temps de parcours des impulsions lumineuses entre leur émission et leur réception en tenant compte de la vitesse de la lumière,
**caractérisé en ce que**
il est prévu un filtre (3) qui peut être attaqué par le signal de sortie du récepteur de lumière (2), et un convertisseur A/N (6) destiné à numériser les réponses du filtre est agencé entre l'unité d'évaluation (7) et le filtre (3), dans lequel l'unité d'évaluation (7) est conçue pour calculer le temps de parcours entre l'émission d'au moins une impulsion lumineuse et l'apparition d'une caractéristique du signal de la réponse provenant du filtre (3).

2. Appareil de mesure de distance selon la revendication 1,
**caractérisé en ce que** la réponse du filtre, lors de l'attaque du filtre (3) avec une impulsion ou une succession d'impulsions, représente un signal avec un comportement d'attaque et/ou d'amortissement caractéristique.

3. Appareil de mesure de distance selon l'une des revendications précédentes,
**caractérisé en ce que** la réponse du filtre, lors de l'attaque du filtre (3) avec une impulsion ou une succession d'impulsions, représente un signal sensiblement sinusoïdal avec une amplitude maximum qui varie.

4. Appareil de mesure de distance selon l'une des revendications précédentes,
**caractérisé en ce que** le filtre (3) est réalisé sous forme de filtre à cohérence, qui est conçu en particulier sous forme de filtre passif d'ordre plus élevé, qui est réalisé de manière discrète ou intégrée, et/ou en ce qu'il possède le tracé en fréquence d'un filtre passe-bande avec une caractéristique de blocage en chute rapide et une cohérence sur au moins une période d'oscillation.

5. Appareil de mesure de distance selon l'une des revendications précédentes,
**caractérisé en ce que** la caractéristique du signal est le début ou la fin de la réponse du filtre.

6. Appareil de mesure de distance selon l'une des revendications précédentes,
**caractérisé en ce que** l'unité d'évaluation (7) est conçue pour calculer le temps de parcours entre le début de l'émission de ladite au moins une impulsion lumineuse et l'apparition du début de la réponse du filtre (3) générée par ladite au moins une impulsion lumineuse reçue.

7. Appareil de mesure de distance selon l'une des revendications précédentes,
**caractérisé en ce qu'**un étage d'échantillonnage (4) est agencé entre le filtre (3) et le convertisseur A/N (6).

8. Appareil de mesure de distance selon la revendication 7,
**caractérisé en ce que** l'étage d'échantillonnage (4) et l'émetteur de lumière (1) sont alimentés avec un signal cadencé commun, qui est en particulier dérivé d'un oscillateur d'ondes acoustiques de surface (5) et peuvent être synchronisés l'un avec l'autre, et dans lequel il est en particulier prévu un oscillateur à quartz pour calibrer l'oscillateur d'ondes acoustiques de surface (5).

9. Appareil de mesure de distance selon l'une des revendications 7 ou 8,
**caractérisé en ce que** l'unité d'évaluation (7) est conçue pour interpoler les valeurs des points de base, fournies par le convertisseur A/N (6), de la réponse du filtre ou pour l'interpolation des contributions de ces valeurs des points de base ainsi que pour la détermination du début de la réponse interpolée du filtre.

10. Appareil de mesure de distance selon l'une des revendications précédentes,
**caractérisé en ce que** le tracé qualitatif du signal de chaque réponse attendue du filtre est mémorisé dans l'unité d'évaluation (7).

11. Appareil de mesure de distance selon l'une des revendications précédentes,
**caractérisé en ce que** l'émetteur de lumière (1) est conçu pour émettre des impulsions individuelles qui se suivent mutuellement ou des trains d'impulsions (salves) qui se suivent mutuellement, et pour le calcul du temps de parcours, il utilise respectivement la réponse du filtre (3) générée par une impulsion lumineuse reçue ou par un train d'impulsions reçu.

12. Appareil de mesure de distance selon l'une des revendications 7 à 11,
**caractérisé en ce que** le convertisseur A/N (6) est susceptible de fonctionner avec un taux de palpage au-dessous du critère de Nyquist, et pour la détermination d'une valeur de distance, il utilise plusieurs trains d'impulsions émises et reçues.

13. Appareil de mesure de distance selon l'une des revendications 11 ou 12,
**caractérisé en ce qu'**un train d'impulsions est constitué de plusieurs impulsions individuelles qui présentent chacune une forme rectangulaire, et le train d'impulsions possède un rapport impulsions/pauses de 1:1, et/ou **en ce qu'**un train d'impulsions est constitué de plus de cinq impulsions individuelles, et quatre valeurs de points de base sont déterminées par le convertisseur A/N (6) par période d'impulsion.
